# FASCICULE DE BREVET EUROPEEN

(11) **EP 2 340 220 B1**
(45) Date de publication et mention de la délivrance du brevet: **17.09.2014**
(21) Numéro de dépôt: 09778159.5
(22) Date de dépôt: 27.08.2009
(51) Int. Cl.: B65D 85/00, B65D 25/10, B60S 1/38

(54) **DISPOSITIF D'EMBALLAGE ET ENSEMBLE COMPRENANT UN BALAI D'ESSUYAGE ET UN DISPOSITIF D'EMBALLAGE DU BALAI**
VERPACKUNGSVORRICHTUNG UND ANORDNUNG MIT EINEM WISCHER UND EINER WISCHERVERPACKUNGSVORRICHTUNG
PACKAGING DEVICE AND ASSEMBLY INCLUDING A WIPER AND A WIPER PACKAGING DEVICE

(30) Priorité: 27.08.2008 FR 0804720
(43) Date de publication de la demande: 06.07.2011
(73) Titulaire: VALEO SYSTEMES D'ESSUYAGE, 78321 La Verrière (FR)
(72) Inventeur: LEFEVRE, Jean-Pierre, 60240 Reilly (FR); JEHANNET, Jean-Pierre, F-27200 Vernon (FR)
(74) Mandataire: Léveillé, Christophe
(86) Numéro de dépôt international: PCT/EP2009/006222
(87) Numéro de publication internationale: WO 2010/022949

(56) Documents cités:
- EP-A- 1 842 788
- DE-A1-102004 013 508
- FR-A- 2 859 713
- US-A1- 2006 081 493

## Description

L'invention concerne un ensemble comprenant au moins un balai d'essuyage et un dispositif d'emballage.

Le document US-A-2006/0163096 décrit un ensemble comportant deux balais pour lequel la coque du dispositif d'emballage délimite un logement associé à chaque balai et dans lequel le balai associé est reçu avec son plan longitudinal médian orienté globalement verticalement.

Le dispositif d'emballage comporte aussi un étui externe dans lequel la coque et les balais sont reçus.

La coque est relativement souple et l'étui est lui relativement rigide, de manière que les balais et la coque sont maintenus redressés verticalement par l'étui.

Ce dispositif d'emballage permet ainsi de redresser simultanément les deux balais lors de leur introduction simultanément avec la coque inférieure.

Cependant, puisque la coque logeant les deux balais est souple, sa manipulation est alors relativement difficile pour un opérateur, lors de l'assemblage des balais avec la coque, et pour la manipulation de la coque avec les balais.

De plus, le dispositif d'emballage comporte des composants réalisés à partir de matériaux différents, ce qui rend sa fabrication relativement complexe et son recyclage difficile.

Les documents EP-B1.663.798 et FR 2859713 décrivent un autre ensemble dans lequel la coque est réalisée de manière que le plan longitudinal médian du balai est globalement horizontal.

Selon EP-B1-663798, la coque délimite un logement ouvert vers le haut, qui comporte trois zones d'appui qui coopèrent avec le balai pour le maintien de l'élément de structure en position redressée en partie.

Cependant, selon ce mode de réalisation, la coque ne reçoit qu'un seul balai, et l'encombrement horizontal de l'ensemble est relativement important, car l'élément de structure du balai n'est que partiellement redressé, et aussi par le fait de la présence du connecteur.

L'invention a pour but de proposer un ensemble d'emballage d'au moins un balai d'essuyage présentant un encombrement réduit, pour lequel l'élément de structure du balai est redressé au moins en partie, et pour lequel la manipulation de la coque inférieure est simplifiée.

Dans ce but, l'invention propose un ensemble d'emballage selon la revendication 1.

Selon d'autres caractéristiques de l'invention, prises isolément ou en combinaison :
- pour faciliter le montage, l'angle aigu non nul délimité par le plan longitudinal médian du balai et par le plan longitudinal vertical orthogonal à la face ouverte du logement est inférieur ou égal à quarante cinq degrés,
- pour assurer le maintien du balai dans l'emballage, l'emballage comprend des moyens de positionnement du balai en position rangée dans le logement,
- les moyens de positionnement du balai sont agencés dans le logement,
- le logement comprend une première zone d'appui et une seconde zone d'appui qui sont décalées l'une par rapport à l'autre, et contre chacune desquelles une première portion et une deuxième portion associée à l'élément de structure du balai est en appui, et au moins une zone de maintien agencée entre la première et la seconde zone d'appui, sur laquelle au moins une troisième portion associée à l'élément de structure du balai est en appui élastique de sorte que lorsque le balai est reçu dans le logement et coopère avec les zones d'appui et de maintien, l'élément de structure est maintenu en position au moins en partie redressée par les zones d'appui et de maintien,
- pour assurer le maintien du balai, la zone de maintien est conformée en un élément pour la retenue de l'élément de structure en position rangée dans le logement,
- la zone de maintien fait saillie latéralement par rapport à une paroi latérale délimitant transversalement le logement,
- la zone de maintien est une nervure d'orientation principale longitudinale, qui fait saillie transversalement par rapport à ladite paroi latérale,
- la zone de maintien comporte une découpe qui est traversée par un connecteur de montage qui est assemblé à l'élément de structure du balai,
- le logement comporte au moins deux zones d'appui dont chacune est portée respectivement par l'une de deux parois latérales qui délimitent transversalement le logement,
- chacune des première et seconde zones d'appui est réalisée en deux parties réparties de part et d'autre du plan longitudinal médian du balai, et entre lesquelles dites parties la lame du balai est reçue,
- les parties de la première zone d'appui et de la seconde zone d'appui qui sont agencées transversalement d'un même coté du plan longitudinal médian forment une même nervure transversale portée par une paroi latérale du logement,
- pour éviter la rotation du balai dans le logement, il est prévu au moins un bossage anti-rotation portée par l'une de deux parois latérales qui délimitent transversalement le logement,
- pour accueillir deux balais, le dispositif d'emballage comporte deux logements longitudinaux destiné chacun à recevoir un balai en position rangé, chaque logement étant de conception conforme à l'une quelconque des revendications précédentes,
- la zone de maintien d'un logement est portée par la paroi latérale dudit logement qui est située à proximité de l'autre des deux logements,
- pour minimiser l'encombrement du dispositif d'emballage, les deux logements sont décalés longitudinalement l'un par rapport à l'autre, et la distance transversale entre lesdits logements est telle que les connecteurs des deux balais sont sensiblement alignés longitudinalement,
- l'ouverture supérieure de la coque est fermée par un film scellé,
- une coque de fermeture de l'ouverture supérieure dudit au moins un logement est prévue,
- la coque de fermeture comporte un dôme supérieur commun aux deux logements, dans lequel les connecteurs des deux balais sont reçus simultanément,
- la coque de fermeture est fixée à la coque par emboîtement élastique, par collage ou par soudage,
- un élément de renfort est fixé sous la coque.

En complément et selon d'autres caractéristiques de l'invention :
- les moyens de positionnement du balai dans le dispositif d'emballage agissent sur des portions associées à l'élément de structure du balai,
- la première portion et la deuxième portion de l'élément de structure du balai sont en s'appui au moins vers le bas, respectivement contre la première zone d'appui et la seconde zone d'appui du logement du dispositif d'emballage,
- la troisième portion associée à l'élément de structure du balai est en appui au moins verticalement vers le haut contre la zone de maintien du logement du dispositif d'emballage,
- la troisième portion est agencée entre les deux extrémités du balai présentant chacune une première et une deuxième portion,
- la troisième portion est maintenue à l'encontre de la zone de maintien qui est agencée entre la première et la deuxième portion,
- l'élément de structure est choisi dans la liste : support de lame, support de vertèbre, déflecteur, vertèbre, embout terminal, connecteur ou est formée d'une combinaison de plusieurs de ces éléments.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective d'un ensemble d'emballage selon l'invention comprenant deux balais d'essuyage ;
- la figure 2 est une coupe de l'ensemble d'emballage représenté à la figure 1 suivant la ligne 2-2 transversale ;
- la figure 3 est une coupe de l'ensemble d'emballage représenté à la figure 1 suivant la ligne 3-3 transversale ;
- la figure 4 est une coupe similaire à celle de la figure 3, dans laquelle l'ensemble d'emballage comporte un élément de renfort ;
- la figure 5 est une représentation schématique en perspective d'un autre mode de réalisation de l'ensemble d'emballage selon l'invention comprenant deux balais d'essuyage ;
- les figures 6A à 6D sont des coupes de l'ensemble d'emballage représenté à la figure 5, respectivement suivant les lignes 6A-6A, 6B-6B, 6C-6C, 6D-6D transversales ;
- la figure 7 est une vue en coupe d'un ensemble d'emballage selon l'invention comprenant un balai de structure différente.

Pour la description de l'invention, on adoptera à titre non limitatif les orientations verticale, longitudinale et transversale selon le repère V, L, T indiqué aux figures.

Dans la description qui va suivre, des éléments identiques, similaires ou analogues seront désignés par les mêmes chiffres de référence.

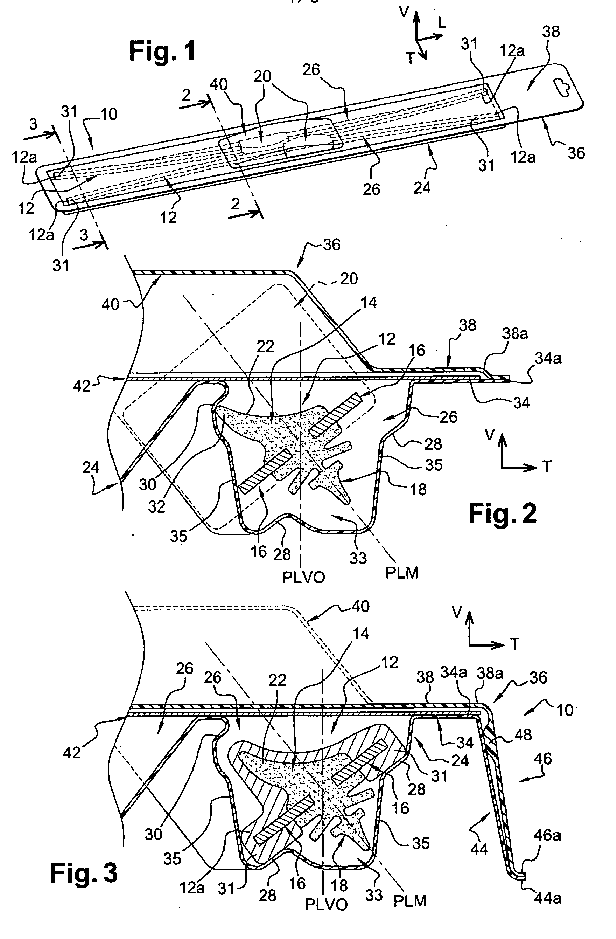

On a représenté à la figure 1 un ensemble comportant plusieurs balais 12 d'essuie-glace, ici deux balais 12 et un dispositif d'emballage 10 des balais 12, dans lequel les deux balais sont reçus.

Comme on peut le voir sur l'ensemble des figures 2 à 4, chaque balai 12 est un balai de faible hauteur communément appelé balai "flat blade", qui comporte un élément de structure 14 d'orientation principale longitudinale, qui porte les autres composants du balai 12.

Selon le mode de réalisation représenté aux figures 2 à 4, l'élément de structure 14 de chaque balai 12 porte deux vertèbres 16, une lame inférieure 18 d'essuyage du panneau vitré, deux embouts terminaux aux extrémités 12a du balai 12, et un connecteur 20 supérieur de montage et d'articulation du balai 12 à l'extrémité d'un bras d'entraînement (non représenté) du balai 12 en mouvement de balayage.

L'élément de structure 14 et les vertèbres 16 forment la structure du balai 12 proprement dit, les vertèbres sont cintrées dans le plan longitudinal médian (PLM) du balai 12, et elles sont déformables élastiquement. Ainsi, lorsque le balai 12 est en appui sur un panneau vitré, les efforts d'appui sont répartis sur toute la longueur de la lame 18.

L'élément de structure 14 comporte en outre une nervure supérieure 22, appelé aussi déflecteur, qui est profilée aérodynamiquement, pour améliorer la pression de la lame 18 sur le panneau vitré, lors du déplacement du véhicule.

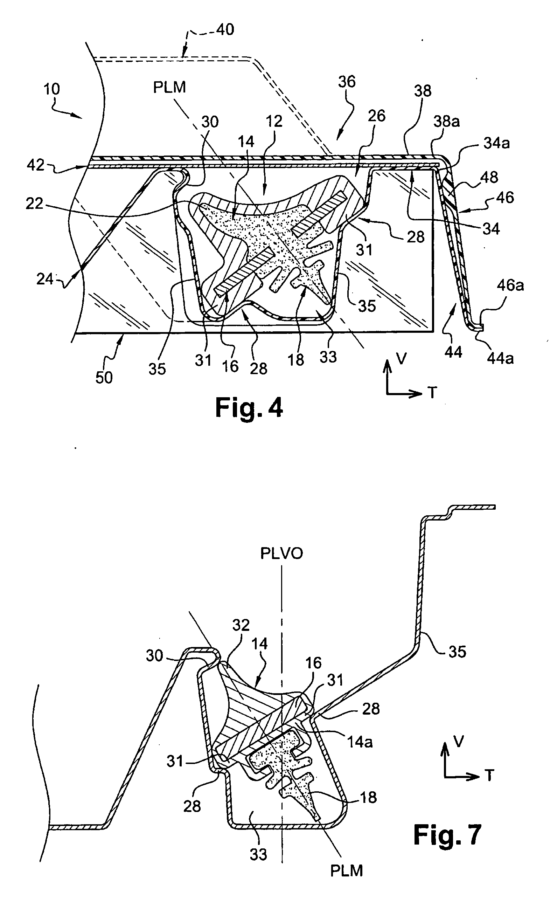

Selon un autre mode de réalisation du balai 12 qui sera décrit en relation à la figure 7, l'élément de structure 14 délimite un logement tubulaire dans lequel une vertèbre 16 est reçue, et intègre une partie formant déflecteur.

Il sera compris que l'invention ne se limite pas à ces deux seuls modes de réalisation des balais 12, et qu'elle concerne plus généralement les balais dont l'élément de structure est cintré selon le plan longitudinal médian du balai, et est déformable élastiquement.

Le dispositif d'emballage 10 comporte une coque inférieure 24 dans laquelle deux logements 26 sont réalisés, chaque logement 26 recevant un balai 12 associé.

Ici, l'ensemble comporte deux balais 12 et deux logements 26 formés dans le dispositif d'emballage 10. Il sera compris que l'invention n'est pas limitée à ce mode de réalisation, et que l'invention concerne aussi un ensemble comportant un nombre différent de balais 12, par exemple un seul balai 12 et le dispositif d'emballage 10 comporte alors le même nombre de logements 26, c'est à dire dans cet exemple un logement 26.

Dans la description qui va suivre, on fera référence à un seul logement 26 et au balai qui lui est associé. Il sera compris que cette description s'applique de manière similaire à tout autre logement 26 et au balai qui est reçu dans ce logement, dans le cas où l'ensemble comporte au moins deux balais 12 et au moins deux logements 26.

Chaque logement 26 est d'orientation principale longitudinale, il est débouchant vers le haut et comporte ainsi une face supérieure horizontale ouverte.

Le logement 26 est délimité transversalement par deux parois latérales 35 longitudinales verticales entre lesquelles le balai 12 est reçu au moins en partie.

Le dispositif d'emballage 10 est aussi réalisé de manière telle que l'élément de structure 14 et par conséquent les vertèbres 16 du balai 12 sont redressés au moins en partie, réduisant ainsi l'encombrement global du dispositif d'emballage 10.

A cet effet, le dispositif d'emballage 10 est réalisé de manière que le balai 12 est maintenu dans une forme, ou position, au moins en partie redressée selon son plan longitudinal médian, à l'intérieur du logement 26.

Pour cela, comme on peut le voir aux figures, le logement 26 comporte une première zone d'appui 28 et une seconde zone d'appui 28 qui sont décalées verticalement l'une par rapport à l'autre, contre chacune desquelles une première portion 31 et une deuxième portion 31 de l'élément de structure 14 sont en appui vers le bas, et il comporte au moins une zone de maintien 30, à l'encontre de laquelle une troisième portion 32 de l'élément de structure 14 du balai 12 est maintenu, qui est agencée entre la première et la seconde zones d'appui 28.

Selon une variante de réalisation non représentée, le connecteur 20 du balai 12 est en appui contre la zone de maintien 30 pour le maintien du balai en position redressée.

Les zones d'appui 28 et de maintien 30 forment des moyens de positionnement du balai dans l'emballage et sont conformées pour maintenir l'élément de structure 14 du balai 12 en position au moins partiellement redressée par déformation élastique, en exerçant sur l'élément de structure 14 des efforts opposés globalement parallèles au plan longitudinal médian. Cette déformation élastique s'opère notamment sur les vertèbres 16.

Par exemple, la première zone d'appui 28 et la seconde zone d'appui 28 du balai sont en appui sur la première portion 31 et la deuxième portion 31 de l'élément de structure 14 selon un premier sens, le long du plan longitudinal médian (PLM), et la zone de maintien 30 est en appui sur la troisième portion 32 de l'élément de structure 14 selon un seconde sens le long du plan longitudinal médian, opposé audit premier sens.

Les trois zones d'appui et de maintien 28, 30 du logement 26 sont aussi agencées dans le logement en définissant l'orientation du plan longitudinal médian du balai 12 par rapport à un plan longitudinal vertical, c'est-à-dire un plan longitudinal qui est perpendiculaire à la face supérieure horizontale ouverte du logement 26.

Selon l'invention, les zones d'appui et de maintien 28, 30 sont agencées de manière que le plan longitudinal médian délimite un angle aigu, avec ledit plan longitudinal vertical (PLVO : plan longitudinal vertical orthogonal à la face ouverte du logement), qui est non nul et inférieur à quatre-vingt dix degrés (90°), c'est-à-dire que le plan longitudinal médian n'est pas horizontal.

Selon l'invention telle que représentée aux figures 1 à 4, l'angle délimité par le plan longitudinal médian et ledit plan longitudinal vertical est d'environ quarante-cinq degrés (45°).

La première zone d'appui 28 et la seconde zone d'appui 28 sont globalement situées sous l'élément de structure 14 et la zone de maintien 30 est globalement située au dessus de la troisième portion 32 de l'élément de structure 14.

La troisième portion 32 de l'élément de structure 14 est alors en appui vers le haut contre la zone de maintien 30.

Ainsi, la zone de maintien 30 réalise un blocage de l'élément de structure 14 du balai 12 en position redressée dans le logement 26, en complément des efforts de frottement produits par l'appui élastique de l'élément de structure 14 contre les zones d'appui et de maintien 28, 30. La zone de maintien 30 forme aussi un élément de retenue du balai 12 dans le logement 26.

Cela permet de réduire les risques que le balai 12 ne se dégage du logement 26 ou de sa position redressée de manière imprévue.

Les première et seconde zones d'appui 28 définissent conjointement un plan longitudinal d'appui des première et deuxième portions 31 d'appui de l'élément de structure, qui est incliné par rapport à un plan horizontal selon le même angle d'inclinaison que le plan longitudinal médian par rapport audit plan longitudinal vertical. Ainsi, l'inclinaison du plan longitudinal d'appui des première et deuxième portions 31 d'appui avec le plan longitudinal vertical orthogonal à la face ouverte du logement 26 forme un angle aigu non nul et différent de 90°.

De plus, chacune des premières et secondes zones d'appui 28, est réalisée en deux parties agencées transversalement de part et d'autre du plan longitudinal médian.

Ces deux parties sont distantes l'une de l'autre, définissant un volume intermédiaire 33 dans lequel la lame 18 du balai 12 associé est reçue.

Ce volume intermédiaire 33 est réalisé pour que la lame 18 soit située à distance des parois du volume 33, comme on peut le voir notamment aux figures 2 et 3. Les risques que la lame 18 ne s'use par frottement contre ces parois, sont alors réduits.

Selon encore un autre aspect des première et seconde zones d'appui 28, les deux parties de la première zone d'appui 28 et de la seconde zone d'appui 28 sont reliées entre elles, de sorte que le logement 26 comporte deux nervures en vis-à-vis qui s'étendent longitudinalement sur sensiblement toute la longueur du logement 26.

Les deux nervures font saillies transversalement vers l'intérieur du logement par rapport aux parois latérales du logement 26.

Ainsi, l'élément de structure 14 du balai est en appui sur ces deux nervures à ses extrémités transversales, par rapport au plan longitudinal médian du balai 12, et la lame 18 du balai 12 est reçue avec jeu entre les deux nervures.

Selon le mode de réalisation représenté aux figures 2 à 4, le logement 26 comporte une zone de maintien 30 qui s'étend transversalement vers l'intérieur du logement 26, depuis une paroi longitudinale verticale 35 du logement 26.

La zone de maintien 30 du logement 26 forme alors une nervure d'orientation principale longitudinale, qui fait saillie transversalement vers l'intérieur du logement 26, par rapport à la paroi latérale 35 qui la porte.

Selon le mode de réalisation selon lequel la zone de maintien 30 est en appui contre l'élément de structure 14 du balai 12, une découpe est réalisée dans la zone de maintien 30. Cette découpe est traversée par le connecteur 20 du balai 12, et divise alors la zone de maintien 30 en deux parties réparties de part et d'autre du connecteur 20.

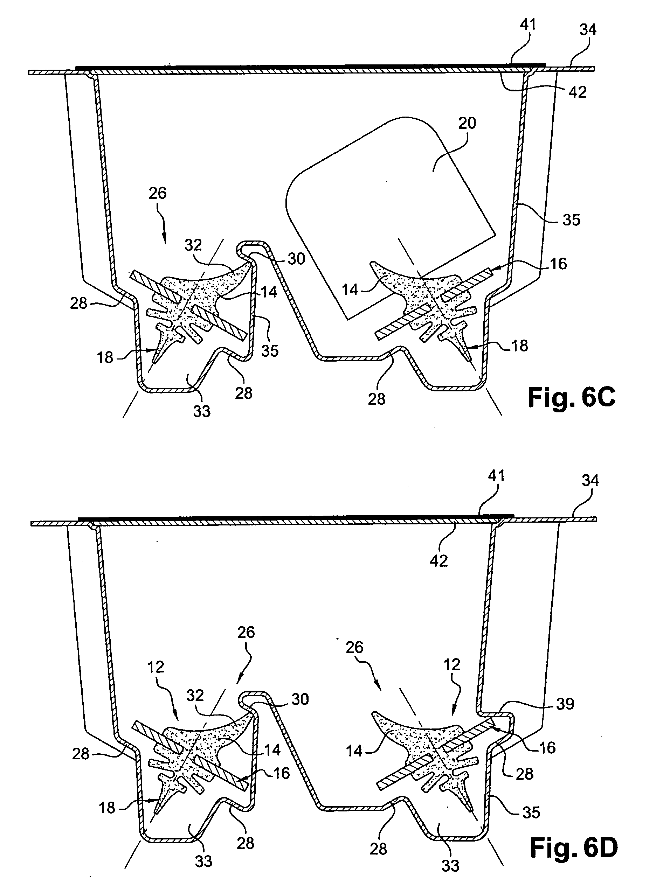

En complément, et comme cela sera décrit plus en détail en relation avec la figure 6D, pour éviter la rotation du balai 12 dans le logement 26, il est prévu de réaliser au moins un bossage 39 d'anti-rotation portée par l'une de deux parois latérales 35 qui délimitent transversalement le logement 26.

Selon le mode de réalisation représenté aux figures, l'ensemble comporte deux balais 12 qui sont reçus dans deux logements 26 associés du dispositif d'emballage 10.

Selon le mode de réalisation de l'invention représenté aux figures 1 à 4, l'inclinaison du plan longitudinal médian de chaque balai 12 est telle que le connecteur 20 et la nervure supérieure 22 du balai 12 sont situés transversalement à proximité de l'autre balai 12, comme on peut le voir aux figures.

La zone de maintien 30 de chaque logement est ainsi portée par la paroi latérale 35 qui est située transversalement à proximité de l'autre logement 26.

L'inclinaison du plan longitudinal médian par rapport au logement 26 permet en outre de réduire l'encombrement vertical du dispositif d'emballage 10. Cela peut s'avérer avantageux pour la mise en rayonnage de plusieurs dispositifs d'emballages 10 selon l'invention, car un rayonnage peut alors recevoir un plus grand nombre de dispositifs d'emballages 10 dans lesquels des balais 12 sont rangés.

Selon un autre aspect de l'invention, permettant de limiter l'encombrement transversal du dispositif d'emballage 10, et comme on peut le voir à la figure 1, les logements 26 du dispositif d'emballage 10 sont décalés longitudinalement l'un par rapport à l'autre, de manière que les connecteurs 20 des balais 12 reçus dans les logements 26 soient eux aussi décalés longitudinalement l'un par rapport à l'autre.

De plus, la distance transversale entre les deux logements 26 est déterminée de manière que les connecteurs 20 des deux balais 12 sont sensiblement alignés longitudinalement, comme on peut le voir à la figure 1.

L'introduction du balai 12 dans le logement 26 associé s'effectue selon un mouvement d'insertion globalement vertical vers le bas, et comporte une première phase dans laquelle la première portion 31 et la deuxième portion 31 de l'élément de structure 14 de chacune des extrémités 12a du balai 12 sont mises en contact avec la première zone d'appui 28 et la seconde zone d'appui 28, respectivement.

Ensuite, l'élément de structure 14 du balai 12 est redressé par un effort vers le bas exercé sur une partie centrale de l'élément de structure 14, de manière à le déformer élastiquement.

Enfin, lorsque la troisième portion 32 de l'élément de structure 14 est située à une cote verticale inférieure à celle de la zone de maintien 30, la troisième portion 32 est positionnée sous la zone de maintien 30.

Les vertèbres 16 du balai 12 sont alors au moins partiellement redressées, c'est-à-dire que leur courbure selon le plan longitudinal médian est moindre que lorsque le balai 12 est au repos, et du fait de leur déformation élastique, les vertèbres exercent un effort de rappel vers leur forme cintrée au repos, qui est transmis aux zones d'appui 28 et de maintien 30.

Comme on l'a dit plus haut, l'ensemble peut comporter plusieurs balais 12 reçus dans plusieurs logements 26 associés. Le dispositif d'emballage 10 comporte une feuille horizontale 34 supérieure qui relie les logements 26, au niveau de leurs extrémités supérieures ouvertes. La feuille 34 comporte ainsi deux ouvertures horizontales par lesquelles les logements sont débouchants vers le haut et au travers desquelles les balais 12 sont introduits dans les logements 26.

La coque inférieure 24 du dispositif d'emballage 10 est réalisée de manière que l'élément de structure 14, les vertèbres 16 et la lame 18 de chaque balai 12 sont situés verticalement au dessous de la feuille 34. Seul le connecteur 20 de chaque balai 12 fait saillie vers le haut par rapport à la feuille 34.

La feuille 34 définit un plan d'appui pour une coque supérieure 36 du dispositif d'emballage 10 qui réalise notamment la fermeture de chaque logement 26, pour protéger les balais 12 contre l'humidité ou les poussières.

Comme on peut le voir aux figures 2 à 4, la coque supérieure 36 comporte un flan inférieur 38 horizontal qui est en appui vers le bas contre la feuille 34 en vis-à-vis de la coque inférieure 24, et un dôme supérieur 40 ouvert vers le bas.

La coque supérieure 36 est en outre réalisée de manière que le dôme supérieur 40 recouvre les connecteurs 20 des deux balais 12.

Ainsi, la coque supérieure 36 comporte un seul dôme supérieur 40 commun aux deux logements 26 de la coque inférieure 24. De plus, les dimensions du dôme supérieur 40 unique sont adaptées aux dimensions des connecteurs 20, de sorte que le volume du dôme 40 est limité, limitant par conséquent la quantité de matière utilisée.

Les logements 26 sont obturés par le flan 38 et par le dôme supérieur 40 de la coque supérieure 36.

La coque supérieure 36 est généralement réalisée en matière plastique transparente.

Selon un autre aspect du dispositif d'emballage 10 selon l'invention, un insert 42 est agencé entre la feuille 34 de la coque inférieure 24 et le flan 38 de la coque supérieure 36.

Cet insert 42 consiste par exemple en une feuille de papier, de carton ou encore plastique, sur lequel diverses informations sont imprimées, comme par exemple la marque et le modèle des balais 12, et/ou une notice de montage des balais 12.

A titre de variante, le dispositif d'emballage comporte deux inserts 42 qui sont agencés longitudinalement de part et d'autre des connecteurs 20 des balais 12.

Selon une autre variante, l'insert 42 est formé d'une ou de plusieurs feuilles pliées une ou plusieurs fois, selon la quantité d'informations qui sont imprimées sur l'insert 42.

On a représenté aux figures 2, 3 et 4 divers modes de liaison entre la coque inférieure 24 et la coque supérieure 36.

A la figure 2, la coque inférieure 24 et la coque supérieure 36 sont reliées entre elles au niveau des bords 34a, 38a de la feuille 34 et du flan 38, respectivement, qui sont collés ou soudés l'un sur l'autre.

Le soudage des bords 34a, 38a est par exemple un soudage par ultrasons ou un soudage thermique.

Aux figures 3 et 4, la feuille 34 de la coque inférieure 24 comporte une aile 44 qui s'étend globalement verticalement vers le bas depuis le bord 34a de la feuille 34. Le flan 38 de la coque supérieure 36 comporte lui aussi une aile 46 associée à l'aile 44 de la feuille 34, et qui s'étend vers le bas depuis le bord 38a du flan 38.

De préférence, chaque bord 34a, 38a de la feuille 34 ou du flan 38 porte une aile 44, 46.

L'aile 46 de la coque supérieure comporte en outre des bossages 48 qui font saillie transversalement par rapport à la face de l'aile 46 située en vis-à-vis de l'aile 44 de la coque inférieure 24, et qui sont reçus dans des ouvertures (non représentées) aménagées dans l'aile 44 de la coque inférieure 24.

Les ailes 44, 46 sont solidarisées entre elles au niveau de leurs bords inférieurs 44a, 46a respectifs par collage ou par soudage, par exemple.

Les ailes 44, 46 permettent d'améliorer la rigidité du dispositif d'emballage 10, car celui-ci est soumis à des contraintes mécaniques importantes, qui sont générées par la déformation élastique de chaque balai 12.

De plus, les ailes 44, 46 permettent de faciliter le montage de la coque supérieure 36 sur la coque inférieure 24, en formant des rampes inclinées de guidage.

Selon encore une autre variante de réalisation représentée à la figure 4, le dispositif d'emballage 10 comporte un élément de renfort 50 fixé sous la coque inférieure 24 et qui participe à la rigidification du dispositif d'emballage 10, pour supporter les efforts résultants de la déformation élastique de chaque balai 12.

Pour permettre de disposer l'ensemble comportant le dispositif d'emballage 10 et les deux balais 12, dans un rayonnage de magasin, la coque supérieure 36 et la coque inférieure 24 sont réalisées de manière qu'un trou conventionnel 50 qui est apte à être traversé par une tige du rayonnage est formé à une extrémité longitudinale du dispositif d'emballage 10,

Ainsi, lorsque l'ensemble comportant le dispositif d'emballage 10 et les deux balais 12 est disposé dans le rayonnage, l'orientation longitudinale L telle que représenté aux figures, est alors verticale sous l'action de la gravité terrestre.

De plus, selon le mode de réalisation pour lequel la zone de maintien 30 comporte une découpe traversée par le connecteur 20 du balai 12, les parties de la zone de maintien 30 forment des butées du connecteur 20 selon la direction longitudinale L. Cela permet de maintenir longitudinalement le balai 12 en position dans le logement 26.

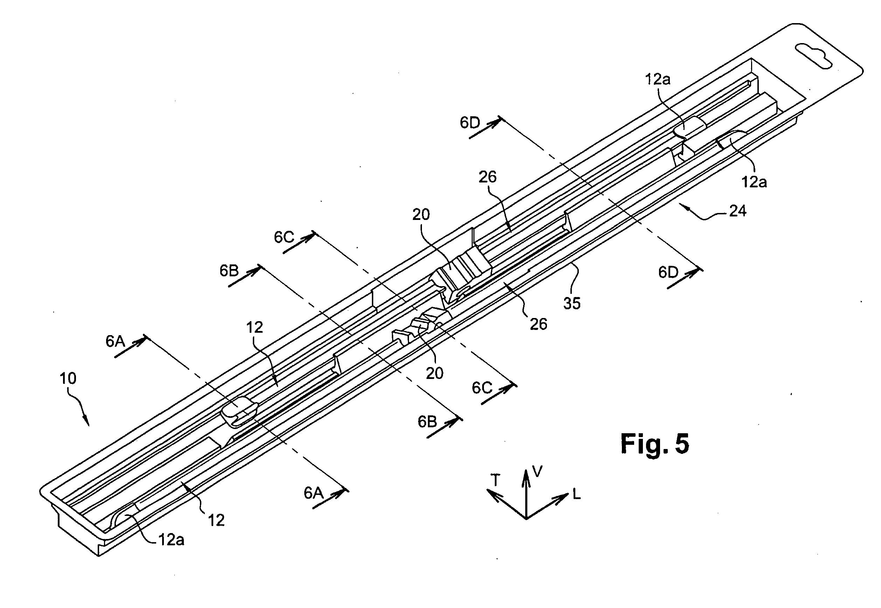

La figure 5 présente un autre mode de réalisation du dispositif d'emballage dans lequel deux balais d'essuyage sont reçus.

La présentation de ce mode de réalisation et des différentes figures qui lui sont associées (figures 5 à 7) vient en complément de l'ensemble de la description faite dans le cadre des figures 2 à 4 présentant l'agencement d'un balai 12 dans un logement 26 de l'emballage 10.

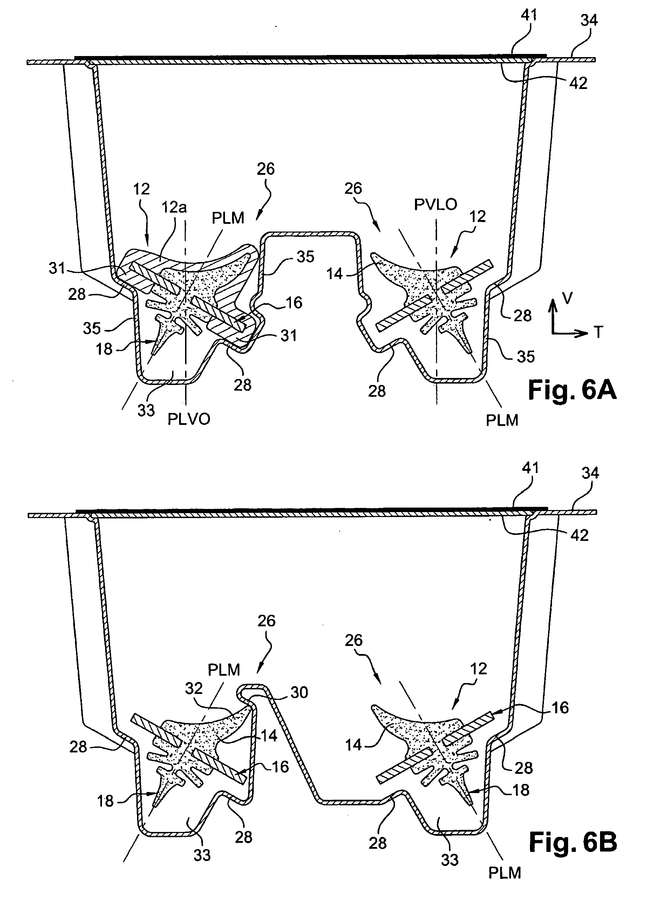

Dans ce mode de réalisation les deux balais 12 sont reçus entièrement dans les logements 26 de la coque 24. On voit en particulier que les connecteurs 20 ne dépassent pas de la coque 24 car les parois latérales 35 des logements 26 sont plus hautes que celles présentées dans le mode de réalisation des figures 1 à 4. Ainsi, dans le cas présent et comme visible sur les figures 6A à 6D, la coque 24 peut être fermée à l'aide d'un film 41 qui peut être directement scellé sur la feuille horizontale 34 reliant les logements 26 au niveau de leurs extrémités supérieures ouvertes. Ce film 41 vient obturer la coque 24 mais il permet également d'éviter que la coque 24 ne s'écarte sous l'action des forces de rappel générées par les balais 12 en position rangée dans les logements 26. En effet, au fil du temps, on peut craindre une altération des propriétés du plastique formant la coque 24 et une dégradation du maintien des balais 12 dans le dispositif d'emballage 10. Grâce au film 41, la coque 24 est rigidifiée et ne peut plus être amenée à s'ouvrir vers l'extérieur.

Par ailleurs, pour empêcher tout appui sur la coque 24, au risque d'endommager les balais 12, un insert 42 rigide est agencé dans la coque 24 au niveau de la feuille 34 et est recouvert par le film 41.

Les variantes relatives à l'insert 42 présentées dans le cadre du premier mode de réalisation sont également envisageables dans le mode de réalisation des figures 5 à 7.

Concernant le positionnement des balais 12 dans les logements 26 (figures 6A à 6D), celui-ci est similaire au positionnement présenté aux figures 2 et 3 dans le cas d'un balai unique mais fait apparaître l'agencement des deux balais dans le dispositif d'emballage.

Les figures 6A à 6D présentent différentes coupes respectivement suivant les lignes 6A-6A, 6B-6B, 6C-6C, 6D-6D transversales de l'ensemble présenté à la figure 5.

Comme on peut le voir de la figure 5 et des vues en coupe, les balais 12 sont de taille différente. En effet, sur la coupe de la figure 6A-6A, le balai de droite est pourvu de son embout terminal 12a alors que pour l'autre balai ce n'est pas le cas.

De la même manière, le balai 12 est retenu dans le logement 26 grâce aux moyens de positionnement formés des zones d'appui 28 et de la zone de maintien 30. Comme visible sur les différentes vues en coupe, les zones d'appui 28 s'étendent longitudinalement sensiblement sur toute la longueur des logements 26 formant deux nervures en vis-à-vis. Ces nervures font saillies transversalement vers l'intérieur de chaque logement par rapport aux parois latérales de ceux-ci.

La zone de maintien 30 forme quant à elle une nervure d'orientation principale longitudinale faisant saillies transversalement à l'intérieur du logement 26 par rapport à la paroi latérale 35 qui la porte. Par contre, la zone de maintien 30 ne s'étend pas sur toute la longueur des logements 26 mais sur certaines portions de ceux-ci.

On pourra donc avoir une alternance de zones de maintien 30 du logement 26 de droite et de zones de maintien 30 du logement 26 de gauche sur la longueur du dispositif d'emballage 10.

Sur la figure 6A, au niveau du logement de gauche, les première et seconde portions 31 agencées sur une extrémité 12a du balai sont en appui sur les premières et seconde zones d'appui 28 du logement 26 alors qu'au niveau du logement de droite, le balai n'est localement retenu par aucun moyen de positionnement.

Sur la figure 6B, au niveau du logement de gauche, le balai est retenu au niveau de sa troisième portion 32 par la zone de maintien 30 alors qu'au niveau du logement de droite, le balai n'est localement retenu par aucun moyen de positionnement.

Sur la figure 6C, au niveau du logement de gauche, le balai est retenu au niveau de sa troisième portion 32 par la zone de maintien 30 alors qu'au niveau du logement de droite, le balai n'est localement retenu par aucun moyen de positionnement puisque la coupe est réalisée au niveau du connecteur 20 du balai de droite.

Sur la figure 6D, au niveau du logement de gauche, le balai est retenu au niveau de sa troisième portion 32 par la zone de maintien 30 alors qu'au niveau du logement de droite, le balai n'est localement retenu par aucun moyen de positionnement. On observera tout de même la présence d'un bossage 39 d'anti-rotation porté par la paroi latérale 35 extérieure du logement 26 de droite.

Ce bossage 39 permet d'éviter un éventuel retournement et/ou une torsion localisée du balai 12 retenu dans le logement 26. Ce bossage n'est pas considéré comme un moyen de maintien car sa suppression n'altère pas le maintien du balai 12 dans son logement 26.

Comme visible sur la figure 6D, le bossage 39 est en contact avec une vertèbre 16 du balai 12 mais on pourrait envisager que le contact se fasse avec un autre élément du balai 12.

Grâce à ce positionnement incliné des balais 12 dans chacun des logements 26 (inclinaison du plan longitudinal médian du balai 12 par rapport au logement 26) il est possible de réduire l'encombrement vertical du dispositif d'emballage 10.

Par ailleurs, en complément de ce positionnement incliné des balais dans les logements 26, ceux-ci sont décalés longitudinalement l'un par rapport à l'autre, de manière que les connecteurs 20 des balais 12 reçus dans les logements 26 soient eux aussi décalés longitudinalement l'un par rapport à l'autre. Chaque connecteur est ainsi reçu dans son entier dans la coque 24 ce qui permet de minimiser l'encombrement du dispositif d'emballage 10 et de simplifier le dispositif d'emballage 10.

Notons par ailleurs que ce positionnement incliné des balais 12 associé aux moyens de positionnement utilisés permet une compensation des forces exercées par chaque balai 12 sur le logement 26 associé de sorte que le dispositif d'emballage se trouve stabilisé.

Selon un autre mode de réalisation de l'invention, présenté à la figure 7, le balai 12 peut présenter une structure différente. Ainsi, dans ce balai 12, l'élément de structure 14 délimite un logement tubulaire 14a dans lequel une vertèbre 16 unique est reçue et la lame d'essuyage 18 est portée par des griffes du logement tubulaire 14a. L'élément de structure 14 intègre ici un déflecteur aérodynamique.

De la même manière que précédemment, le logement 26 présente des moyens de positionnement comprenant des zones d'appui 28 et une zone de maintien 30, différentes portions du balai 12 étant destinées à coopérer avec ces différentes zones. Notamment, les premières et deuxièmes portions 31 sont destinées à prendre appui sur les zones d'appui 28 et la troisième portion 32 est destinée à être retenue par la zone de maintien 30.

Dans le cas présent, la troisième portion 32 est localisée le déflecteur aérodynamique intégré au logement tubulaire 14a. Du fait de la structure différente de ce balai 12, on constate qu'il est en contact et retenu au niveau des différentes zones, zones d'appui 28 et zone de maintien 30.

Sur la figure 7, on n'a représenté qu'un seul logement 26 mais le dispositif d'emballage peut présenter deux logements 26 pour accueillir deux balais 12 comme dans le cas des figures 5 et 6A à 6D.

Il sera compris que l'invention ne se limite pas à ces deux seuls modes de réalisation des balais 12, et qu'elle concerne plus généralement les balais dont l'élément de structure est cintré selon le plan longitudinal médian du balai, et est déformable élastiquement.

Ainsi, on entend par élément de structure un élément du type support de lame, support de vertèbre, déflecteur, ou encore vertèbre de balai d'essuyage ou encore une combinaison de plusieurs de ces éléments.

Bien évidemment, localement le balai, par ses embouts terminaux ou son connecteur, peut être en contact avec le logement 26 du dispositif d'emballage 10.

## Revendications

1. Ensemble comprenant :
- au moins un balai (12) d'essuyage, ce balai (12) d'essuyage comprenant une lame (18) d'essuyage, et au moins un élément de structure (14) d'orientation principale longitudinale déformable élastiquement et cintré selon un plan longitudinal médian du balai (12),
- un dispositif d'emballage (10) comprenant au moins une coque (24) qui délimite un logement (26) d'orientation principale longitudinale ouvert vers le haut, dans lequel ledit au moins un balai (12) est reçu en position rangée, de telle manière que l'élément de structure (14) du balai (12) est déformé élastiquement selon le plan longitudinal médian et est ainsi au moins en partie redressé,
**et en ce que** le dispositif d'emballage (10) comprend des moyens de positionnement (28, 30) du balai (12) pour assurer le maintien du balai (12) en positio**n** rangée dans le logement (26), ces moyens de positionnement (28, 30) du balai (12) sont agencés dans le logement 26), **et en ce que** le logement (26) comprend une première zone d'appui (28) et une seconde zone d'appui (28) qui sont décalées l'une par rapport à l'autre, et contre chacune desquelles une première portion (31) et une deuxième portion (31) associée à l'élément de structure (14) du balai (12) est en appui, et au moins une zone de maintien (30) agencée entre la première et la seconde zones d'appui (28), sur laquelle au moins une troisième portion (32) associée à l'élément de structure (14) du balai (12) est en appui élastique de sorte que lorsque le balai (12) est reçu dans le logement (26) et coopère avec les zones d'appui (28) et de maintien (30), l'élément de structure (14) est maintenu en position au moins en partie redressée par les zones d'appui et de maintien (28, 30) en ce que lorsque le balai est en position rangée dans le dispositif d'emballage, le plan longitudinal médian (PLM) du balai (12) délimite avec un plan longitudinal vertical orthogonal (PLVO) à la face ouverte du logement (26), un angle aigu non nul et différent de 90°.

2. Ensemble selon la revendication précédente, **caractérisé en ce que** le plan longitudinal médian (PLM) du balai (12) délimite avec le plan longitudinal vertical orthogonal (PLVO) à la face ouverte du logement (26), un angle aigu non nul, inférieur ou égal à quarante cinq degrés.

3. Ensemble selon la revendication 1, **caractérisé en ce que** la zone de maintien (30) est conformée en un élément pour la retenue de l'élément de structure (14) en position rangée dans le logement (26).

4. Ensemble selon l'une des revendications 1 ou 3, caractérisé, **caractérisé en ce que** la zone de maintien (30) fait saillie latéralement par rapport à une paroi latérale (35) délimitant transversalement le logement (26).

5. Ensemble selon l'une des revendications précédentes, **caractérisé en ce que** la zone de maintien (30) est une nervure d'orientation principale longitudinale, qui fait saillie transversalement par rapport à ladite paroi latérale (35).

6. Ensemble selon l'une des revendications précédentes, **caractérisé en ce que** la zone de maintien (30) comporte une découpe qui est traversée par un connecteur (20) de montage qui est assemblé à l'élément de structure (14), du balai (12).

7. Ensemble selon l'une des revendications précédentes, **caractérisé en ce que** le logement (26) comporte deux zones d'appui (28) dont chacune est portée respectivement par l'une de deux parois latérales (35) qui délimitent transversalement le logement (26).

8. Ensemble selon la revendication précédente, **caractérisé en ce que** chacune des première et seconde zones d'appui (28) est réalisée en deux parties réparties de part et d'autre du plan longitudinal médian du balai (12), et entre lesquelles dites parties la lame (18) du balai (12) est reçue.

9. Ensemble selon la revendication précédente, **caractérisé en ce que** les parties de la première zone d'appui (28) et de la seconde zone d'appui (28) qui sont agencées transversalement d'un même coté du plan longitudinal médian forment une même nervure transversale portée par une paroi latérale (35) du logement (26).

10. Ensemble selon l'une des revendications précédentes, **caractérisé en ce que** le logement (26) comprend au moins un bossage (39) anti-rotation portée par l'une de deux parois latérales qui délimitent transversalement le logement

11. Ensemble, **caractérisé en ce qu'**il comporte deux logements (26) longitudinaux destiné chacun à recevoir un balai (12) en position rangé, chaque logement (26) étant de conception conforme à l'une quelconque des revendications précédentes.

12. Ensemble selon la revendication précédente, **caractérisé en ce que** la zone de maintien (30) d'un logement (26) est portée par la paroi latérale (35) dudit logement (26) qui est située à proximité de l'autre des deux logements (26).

13. Ensemble selon la revendication précédente, **caractérisé en ce que** les deux logements (26) sont décalés longitudinalement l'un par rapport à l'autre, et **en ce que** la distance transversale entre lesdits logements (26) est telle que les connecteurs (20) des deux balais (12) sont sensiblement alignés longitudinalement.

14. Ensemble selon l'une quelconque des revendications précédentes, **caractérisé en ce que** la première portion (31) et la deuxième portion (31) de l'élément de structure (14) du balai (12) sont en s'appui au moins vers le bas, respectivement contre la première zone d'appui (28) et la seconde zone d'appui (28) du logement (26) du dispositif d'emballage (10).

15. Ensemble selon la revendication précédente, **caractérisé en ce que** la troisième portion (32) associée à l'élément de structure (14) du balai (12) est en appui au moins verticalement vers le haut contre la zone de maintien (30) du logement (26) du dispositif d'emballage (10).

16. Ensemble selon les revendications 14 et 15, **caractérisé en ce que** la troisième portion (32) est maintenue à l'encontre de la zone de maintien (30) qui est agencée entre la première et la deuxième portion (31).

17. Ensemble selon l'une quelconque des revendications précédentes, **caractérisé en ce que** l'élément de structure (14) est choisi dans la liste : support de lame, support de vertèbre, déflecteur, vertèbre, embout terminal, connecteur ou une combinaison de plusieurs de ces éléments.

## Patentansprüche

1. Anordnung, umfassend:
- mindestens ein Wischerblatt (12), wobei dieses Wischerblatt (12) ein Wischerleiste (18) und mindestens ein Strukturelement (14) mit im Wesentlichen Längsausrichtung umfasst, das elastisch verformbar und entlang einer Längsmittelebene des Wischers (12) gebogen ist,
- eine Verpackungsvorrichtung (10), umfassend mindestens eine Schale (24), die ein Gehäuse (26) mit im Wesentlichen Längsausrichtung begrenzt, das nach oben offen ist, in dem der mindestens eine Wischer (12) in Aufbewahrungsposition aufgenommen ist, so dass das Strukturelement (14) des Wischers (12) entlang der Längsmittelebene elastisch verformt ist und so mindestens teilweise gerade ausgerichtet ist,
und dadurch, dass die Verpackungsvorrichtung (10) Mittel zur Positionierung (28, 30) des Wischers (12) umfasst, um das Halten des Wischers (12) in Aufbewahrungsposition in dem Gehäuse (26) zu gewährleisten, wobei diese Mittel zur Positionierung (28, 30) des Wischers (12) in dem Gehäuse (26) angeordnet sind,
und dadurch, dass das Gehäuse (26) einen ersten Auflagebereich (28) und einen zweiten Auflagebereich (28), die voneinander beabstandet sind, und wobei gegen jeden von ihnen ein erster Abschnitt (31) und ein zweiter Abschnitt (31), der mit dem Strukturelement (14) des Wischers (12) assoziiert ist, anliegt, und mindestens einen Haltebereich (30) umfasst, der zwischen dem ersten und dem zweiten Auflagebereich (28) angeordnet ist, auf dem mindestens ein dritter Abschnitt (32), der mit dem Strukturelement (14) des Wischers (12) assoziiert ist, elastisch anliegt, so dass, wenn der Wischer (12) in dem Gehäuse (26) aufgenommen wird und mit den Auflage- (28) und Haltebereichen (30) zusammenwirkt, das Strukturelement (14) von den Auflage- und Haltebereichen (28, 30) in einer mindestens teilweise gerade ausgerichteten Position gehalten wird, dadurch, dass, wenn sich der Wischer in Aufbewahrungsposition in der Verpackungsvorrichtung befindet, die Längsmittelebene (PLM) des Wischers (12) mit einer Längsvertikalorthogonalebene (PLVO) an der offenen Seite des Gehäuses (26) einen spitzen Winkel bildet, der nicht null und verschieden von 90° ist.

2. Anordnung nach dem vorhergehenden Anspruch, **dadurch gekennzeichnet, dass** die Längsmittelebene (PLM) des Wischers (12) mit der Längsvertikalorthogonalebene (PLVO) an der offenen Seite des Gehäuses (26) einen spitzen Winkel bildet, der nicht null und kleiner oder gleich fünfundvierzig Grad ist.

3. Anordnung nach Anspruch 1, **dadurch gekennzeichnet, dass** der Haltebereich (30) als ein Element zum Halten des Strukturelements (14) in Aufbewahrungsposition in dem Gehäuse (26) ausgebildet ist.

4. Anordnung nach Anspruch 1 oder 3, **dadurch gekennzeichnet, dass** der Haltebereich (30), bezogen auf eine Seitenwand (35), die das Gehäuse (26) quer begrenzt, seitlich vorspringt.

5. Anordnung nach einem der vorhergehenden Ansprüche, **dadurch gekennzeichnet, dass** der Haltebereich (30) eine im Wesentlichen längs ausgerichtete Rippe ist, die, bezogen auf die Seitenwand (35), quer vorspringt.

6. Anordnung nach einem der vorhergehenden Ansprüche, **dadurch gekennzeichnet, dass** der Haltebereich (30) einen Einsatz umfasst, der von einem Montageverbindungsstück (20) durchdrungen wird, das mit dem Strukturelement (14) des Wischers (12) zusammengesetzt ist.

7. Anordnung nach einem der vorhergehenden Ansprüche, **dadurch gekennzeichnet, dass** das Gehäuse (26) zwei Auflagebereiche (28) umfasst, von denen jeder jeweils von einer der beiden Seitenwände (35), die das Gehäuse (26) quer begrenzen, getragen wird.

8. Anordnung nach dem vorhergehenden Anspruch, **dadurch gekennzeichnet, dass** sowohl der erste als auch der zweite Auflagebereich (28) in zwei Teilen auf beiden Seiten der Längsmittelebene des Wischers (12) ausgeführt ist, und die Leiste (18) des Wischers (12) zwischen diesen Teilen aufgenommen wird.

9. Anordnung nach dem vorhergehenden Anspruch, **dadurch gekennzeichnet, dass** die Teile des ersten Auflagebereichs (28) und des zweiten Auflagebereichs (28), die auf derselben Seite der Längsmittelebene quer angeordnet sind, eine selbe Querrippe bilden, die von einer Seitenwand (35) des Gehäuses (26) getragen wird.

10. Anordnung nach einem der vorhergehenden Ansprüche, **dadurch gekennzeichnet, dass** das Gehäuse (26) mindestens einen eine Drehung verhindernden Vorsprung (39) umfasst, der von einer der beiden Seitenwände getragen wird, die das Gehäuse quer begrenzen.

11. Anordnung, **dadurch gekennzeichnet, dass** sie zwei längliche Gehäuse (26) umfasst, die dazu bestimmt sind, jeweils einen Wischer (12) in Aufbewahrungsposition aufzunehmen, wobei jedes Gehäuse (26) gemäß einem der vorhergehenden Ansprüche konzipiert ist.

12. Anordnung nach dem vorhergehenden Anspruch, **dadurch gekennzeichnet, dass** der Haltebereich (30) eines Gehäuses (26) von der Seitenwand (35) des Gehäuses (26) getragen wird, die in der Nähe des anderen der beiden Gehäuse (26) liegt.

13. Anordnung nach dem vorhergehenden Anspruch, **dadurch gekennzeichnet, dass** die beiden Gehäuse (26) längs voneinander beabstandet sind und dadurch, dass der Querabstand zwischen den Gehäusen (26) derart ist, dass die Verbindungsstücke (20) der beiden Wischer (12) im Wesentlichen in Längsrichtung ausgerichtet sind.

14. Anordnung nach einem der vorhergehenden Ansprüchen, **dadurch gekennzeichnet, dass** der erste Abschnitt (31) und der zweiten Abschnitt (31) des Strukturelements (14) des Wischers (12) mindestens nach unten bzw. gegen den ersten Auflagebereich (28) und den zweiten Auflagebereich (28) des Gehäuses (26) der Verpackungsvorrichtung (10) anliegen.

15. Anordnung nach dem vorhergehenden Anspruch, **dadurch gekennzeichnet, dass** der dritte Abschnitt (32), der mit dem Strukturelement (14) des Wischers (12) assoziiert ist, mindestens vertikal nach oben gegen den Haltebereich (30) des Gehäuses (26) der Verpackungsvorrichtung (10) anliegt.

16. Anordnung nach Anspruch 14 und 15, **dadurch gekennzeichnet, dass** der dritte Abschnitt (32) gegen den Haltebereich (30) gehalten wird, der zwischen dem ersten und dem zweiten Abschnitt (31) angeordnet ist.

17. Anordnung nach einem der vorhergehenden Ansprüche, **dadurch gekennzeichnet, dass** das Strukturelement (14) ausgewählt ist aus der Liste: Wischerleistenträger, Federschienenträger, Deflektor, Federschiene, Endaufsatz, Verbindungsstück oder eine Kombination von mehreren dieser Elemente.

## Claims

1. Assembly comprising:
- at least one wiper (12), this wiper (12) comprising a wiper blade (18), and at least one structural element (14) of longitudinal main orientation which is elastically deformable and curved along a median longitudinal plane of the wiper (12),
- a packaging device (10) comprising at least one shell (24) which delimits a housing (26) of longitudinal main orientation which is open to the top and in which the said at least one wiper (12) is received in a stored position such that the structural element (14) of the wiper (12) is elastically deformed along the median longitudinal plane and is thus at least partially straightened,
and in that the packaging device (10) comprises means (28, 30) for positioning the wiper (12) in order to retain the wiper (12) in the stored position in the housing (26), these means (28, 30) for positioning the wiper (12) being arranged in the housing (26),
and in that the housing (26) comprises a first bearing zone (28) and a second bearing zone (28) which are offset with respect to one another, and against each of which a first portion (31) and a second portion (31) associated with the structural element (14) of the wiper (12) bear, and at least one retaining zone (30) arranged between the first and the second bearing zones (28) and on which at least a third portion (32) associated with the structural element (14) of the wiper (12) bears elastically such that, when the wiper (12) is received in the housing (26) and cooperates with the bearing (28) and retaining (30) zones, the structural element (14) is retained in an at least partially straightened position by the bearing and retaining zones (28, 30) in that, when the wiper is in the stored position in the packaging device, the median longitudinal plane (PLM) of the wiper (12) delimits, with a vertical longitudinal plane orthogonal (PLVO) to the open surface of the housing (26), a non-zero acute angle which differs from 90°.

2. Assembly according to the preceding claim, **characterized in that** the median longitudinal plane (PLM) of the wiper (12) delimits, with the vertical longitudinal plane orthogonal (PLVO) to the open surface of the housing (26), a non-zero acute angle which is less than or equal to forty-five degrees.

3. Assembly according to Claim 1, **characterized in that** the retaining zone (30) is configured as an element for retaining the structural element (14) in the stored position in the housing (26).

4. Assembly according to either of Claims 1 and 3, **characterized in that** the retaining zone (30) projects laterally with respect to a lateral wall (35) transversely delimiting the housing (26).

5. Assembly according to one of the preceding claims, **characterized in that** the retaining zone (30) is a rib of longitudinal main orientation which projects transversely with respect to the said lateral wall (35).

6. Assembly according to one of the preceding claims, **characterized in that** the retaining zone (30) comprises a cutout which is traversed by an assembly connector (20) which is assembled to the structural element (14) of the wiper (12).

7. Assembly according to one of the preceding claims, **characterized in that** the housing (26) comprises two bearing zones (28) each of which is borne respectively by one of two lateral walls (35) which transversely delimit the housing (26).

8. Assembly according to the preceding claim, **characterized in that** each of the first and second bearing zones (28) is produced in two parts distributed on either side of the median longitudinal plane of the wiper (12), and between which said parts of the blade (18) of the wiper (12) is received.

9. Assembly according to the preceding claim, **characterized in that** the parts of the first bearing zone (28) and of the second bearing zone (28) which are arranged transversely on one and the same side of the median longitudinal plane form one and the same transverse rib borne by a lateral wall (35) of the housing (26).

10. Assembly according to one of the preceding claims, **characterized in that** the housing (26) comprises at least one anti-rotation boss (39) borne by one of two lateral walls which transversely delimit the housing.

11. Assembly, **characterized in that** it comprises two longitudinal housings (26) each intended to receive a wiper (12) in the stored position, each housing (26) being designed according to any one of the preceding claims.

12. Assembly according to the preceding claim, **characterized in that** the retaining zone (30) of one housing (26) is borne by the lateral wall (35) of the said housing (26) which is situated in the vicinity of the other of the two housings (26).

13. Assembly according to the preceding claim, **characterized in that** the two housings (26) are offset longitudinally with respect to one another, and **in that** the transverse distance between the said housings (26) is such that the connectors (20) of the two wipers (12) are substantially aligned longitudinally.

14. Assembly according to any one of the preceding claims, **characterized in that** the first portion (31) and the second portion (31) of the structural element (14) of the wiper (12) bear at least towards the bottom respectively against the first bearing zone (28) and the second bearing zone (28) of the housing (26) of the packaging device (10).

15. Assembly according to the preceding claim, **characterized in that** the third portion (32) associated with the structural element (14) of the wiper (12) bears at least vertically towards the top against the retaining zone (30) of the housing (26) of the packaging device (10).

16. Assembly according to Claims 14 and 15, **characterized in that** the third portion (13) is retained against the retaining zone (30) which is arranged between the first and the second portion (31).

17. Assembly according to any one of the preceding claims, **characterized in that** the structural element (14) is chosen from the following list: blade support, vertebra support, deflector, vertebra, end-piece, connector or a combination of a plurality of these elements.
